# FASCICULE DE BREVET EUROPEEN

(11) **EP 3 713 659 B1**
(45) Date de publication et mention de la délivrance du brevet: **28.06.2023**
(21) Numéro de dépôt: 18800974.0
(22) Date de dépôt: 19.11.2018
(51) Int. Cl.: B01D 53/64, B01D 45/04, B01D 53/82, B01D 53/83

(54) **PROCEDE DE TRAITEMENT DE MATIERE MINERALE POUR LA FABRICATION DE CIMENT, EN DEPOLLUANT LES FUMEES ET INSTALLATION POUR LA MISE EN OEUVRE D'UN TEL PROCEDE**
VERFAHREN ZUR BEHANDLUNG VON MINERALISCHEM MATERIAL FÜR DIE ZEMENTHERSTELLUNG MIT DEKONTAMINIERUNG DER ABGASE UND ANLAGE ZUR DURCHFÜHRUNG EINES SOLCHEN VERFAHRENS
METHOD FOR TREATING MINERAL MATERIAL FOR THE PRODUCTION OF CEMENT, DEPOLLUTING THE FUMES, AND FACILITY FOR IMPLEMENTING SUCH A METHOD

(30) Priorité: 20.11.2017 FR 1760935
(43) Date de publication de la demande: 30.09.2020
(73) Titulaire: Fives FCB, 59650 Villeneuve d'Ascq (FR)
(72) Inventeur: GUIMARD, Yannick, 59650 Villeneuve D'Ascq (FR)
(74) Mandataire: Novagraaf Group
(86) Numéro de dépôt international: PCT/EP2018/081695
(87) Numéro de publication internationale: WO 2019/097045

(56) Documents cités:
- WO-A1-2004/108254
- JP-A- 2017 029 932
- US-A1- 2011 289 923

## Description

L'invention concerne le domaine du traitement des matières minérales impliquant un procédé de combustion, et adresse plus particulièrement le problème de la pollution générée lors du traitement.

Dans ce qui suit, on s'intéresse en particulier à la fabrication du ciment bien que l'invention peut s'appliquer à d'autres procédés de traitement de matières minérales.

La fabrication de ciment utilise pour sa plus grande part une matière cuite, le clinker, qui est produite à partir de minéraux dont le constituant essentiel est le carbonate de calcium.

Plus précisément, le clinker est obtenu à partir d'une matière première composée d'un mélange de minéraux, parmi lesquels notamment l'argile et le calcaire. Ces minéraux sont successivement broyés, préchauffés, puis cuits dans un four rotatif.

La matière première peut comprendre des impuretés, considérées comme des polluants dans le cadre de la fabrication de ciment, et notamment des métaux lourds. Parmi ces polluants, le mercure fait l'objet d'attention particulière, du fait de ses impacts négatifs sur l'environnement et la santé des populations. Le mercure se retrouve aussi bien sous forme élémentaire que sous forme composée. Par soucis de simplification, dans ce qui suit, on désignera par mercure aussi bien le mercure élémentaire que ses composés. Par ailleurs, en plus d'être apporté par les minéraux, le combustible peut également comprendre du mercure. Ce mercure est volatilisé sous l'effet de la température dans l'équipement thermique et se retrouve, sous forme élémentaire ou composée, dans les fumées. Par conséquent, les taux de mercure atteints dans le procédé de fabrication du clinker nécessitent la mise en place de moyens pour réduire les rejets de mercure dans l'environnement.

A cet effet, il est connu d'injecter un agent réactif, typiquement du charbon actif, dans les fumées générées par le procédé de fabrication, par exemple en aval du préchauffeur. La granulométrie du charbon actif est de préférence faible pour assurer une bonne performance de captation des polluants, de sorte qu'elle est proche de celle des poussières présentes dans les fumées. Le charbon actif qui a capturé le mercure est alors retenu sur les manches du filtre, avec les poussières. Le mélange constitué des poussières et du charbon actif chargé en mercure ne peut pas être réinjecté dans le procédé et est donc considéré comme un déchet. Ces poussières représentent environ 5% de la matière première initiale, et constituent donc une perte. Afin de limiter ces pertes, les poussières du filtre peuvent être soutirées et être réinjectées directement dans le ciment, avec le mercure et le charbon actif. Le ciment ainsi obtenu peut présenter un aspect visuel négatif, voire des propriétés dégradées. En outre, la présence de mercure dans le produit fini peut être mal perçue par l'utilisateur.

Le document JP2010-227900 propose de nettoyer les fumées d'un four de calcination pour la production du ciment en mettant en place un système permettant de séparer les poussières présentes dans les fumées en un premier flux de particules grossières et un deuxième flux de particules fines, chargées en mercure. Le flux de particules fines est chauffé, afin de vaporiser le mercure ; le gaz, comprenant le mercure, et les particules sont ensuite séparés. Ces particules, ainsi que les particules grossières, peuvent être réinjectées dans le procédé de fabrication du ciment. Les gaz riches en mercure sont nettoyés à l'aide de charbon actif, puis rejetés à l'atmosphère.

Ce procédé suppose que le mercure n'est présent que dans le flux de particules fines, ce qui n'est pas nécessairement vrai, de sorte que les particules grossières réinjectées participent à l'augmentation de la concentration du mercure dans le procédé. En outre, l'utilisation du charbon actif n'est pas optimisée, augmentant les coûts.

Le document JP2017-29932 propose quant à lui d'injecter du charbon actif en amont d'un filtre. A partir du filtre, un mélange de poussières contenues dans les fumées du procédé et de charbon actif est récupéré. Ce mélange est envoyé dans un cyclone, qui le sépare en une fraction fine, c'est-à-dire contenant les particules les plus fines, et une fraction grossière. La fraction grossière est envoyée dans une unité de récupération du mercure, et la fraction fine est directement réinjectée dans un préchauffeur. La fraction grossière, nettoyée du mercure, est également renvoyée au préchauffeur.

Dans ce document, il est supposé que comme le mercure est préférentiellement adsorbé par les particules les plus grosses, seule la fraction grossière contient du mercure. Plus précisément, dans ce document, il est considéré que la fraction grossière est concentrée en charbon actif, et qu'en opérant une classification dans le cyclone en choisissant un point de classification compris entre 10 et 20 µm, la fraction grossière contient plus de 90% du charbon actif injecté dans les fumées.

Or, on l'a vu, la différence de taille entre les poussières et les particules de charbon actif est faible, de sorte qu'avec la solution du document JP2017-29932, la fraction grossière contient toujours une partie des poussières. Pour éviter de perdre cette matière, la fraction grossière est renvoyée au préchauffeur. Or, la fraction grossière contenant du charbon actif, ce dernier est brûlé dans le préchauffeur. De même, la fraction fine renvoyée au préchauffeur contient également du charbon actif. Le renvoi du charbon actif au préchauffeur pose des problèmes notamment en matière d'environnement à cause des émissions de CO.

En outre, le charbon actif avant la récupération du mercure n'est pas nécessairement saturé en mercure, de sorte que son incinération dans le préchauffeur constitue une perte augmentant les coûts.

Il existe donc un besoin pour un nouveau procédé de traitement des matières minérales, en particulier un procédé de production du ciment, et une nouvelle installation correspondante surmontant notamment l'inconvénient précité.

Ainsi, un premier objet de l'invention est de proposer un nettoyage d'un polluant contenu dans des fumées issues d'une unité de combustion limitant efficacement les rejets du polluant dans l'atmosphère.

Un deuxième objet de l'invention est de proposer un nettoyage du polluant contenu dans des fumées issues d'une unité de combustion permettant de diminuer les pertes de matières premières.

Un troisième objet de l'invention est de proposer un nettoyage du polluant contenu dans des fumées issues d'une unité de combustion n'impactant pas la qualité du produit fini, et notamment du ciment dans le cas d'un four de calcination du clinker de ciment.

Un quatrième objet de l'invention est de proposer un nettoyage du polluant contenu dans des fumées issues d'une unité de combustion dans lequel l'utilisation de l'agent réactif est optimisée, de manière à diminuer les coûts.

Un cinquième objet de l'invention est de proposer un nettoyage du polluant contenu dans des fumées issues d'une unité de combustion n'augmentant pas les coûts de fabrication.

Un sixième objet de l'invention est de proposer un nettoyage du polluant contenu dans des fumées issues d'une unité de combustion aisé à intégrer dans un procédé et une installation de traitement de matière minérale préexistants.

A cet effet, selon un premier aspect, l'invention propose un procédé de traitement de matières minérales selon la revendication 1.
Un tel recyclage s'opère donc implicitement à une température de fumées ne détériorant pas les propriétés de l'agent réactif, en particulier le charbon actif, et de sorte que ce dernier continue à se charger en polluants, avant d'être extrait du procédé.

La fonction d'un tel recyclage est donc fondamentalement différente de celui mis en oeuvre dans le document JP2017-29932 qui recycle la fraction grossière riche en agent réactif, mais seulement lorsqu'elle est nettoyée du mercure (c'est à dire uniquement lorsque déchargée des polluants) directement à l'unité de combustion (à la base du préchauffeur), en vue d'être incinérée, et non de sorte à prolonger l'action de captation des polluants par l'agent réactif et de permettre à l'agent réactif de se saturer en polluants.

Comme il sera compris par la suite, prolonger le temps de contact de l'agent réactif permet, au moins selon un mode de réalisation, d'utiliser une granulométrie grossière pour l'agent réactif (*i.e* au moins 60 micromètres avec *a priori* une réactivité aux polluants moindre en comparaison à une granulométrie inférieure de l'agent réactif en raison d'une moindre surface spécifique). En utilisant une granulométrie grossière pour l'agent réactif (*i.e* au moins 60 micromètres) éloignée de celle des poussières, de granulométrie typiquement comprise entre 10 et 30 micromètres, il devient avantageusement possible d'obtenir une meilleure séparation des poussières et des grossières (agent réactif chargé en polluants), par le dispositif de sélection aéraulique. On minimise avantageusement le taux de poussières dans les grossières, et comparativement au procédé mis en oeuvre dans le document JP2017-29932.

A cet effet, le point de classification du dispositif de sélection aéraulique peut être compris entre 25 µm et 80 µm, tel que par exemple entre 30 µm et 60 µm, c'est-à-dire sensiblement supérieur à celui mis en oeuvre dans le document JP2017-29932 qui est compris entre 10 µm et 20 µm. Le procédé permet ainsi de nettoyer efficacement les fumées en utilisant de manière optimale l'agent réactif et en limitant les pertes de matières. En effet, les poussières récupérées au deuxième dispositif de filtration peuvent aisément être réinjectées dans le procédé de traitement de la matière minérale.

Selon un mode de réalisation, au moins une partie des particules de l'agent réactif chargé en polluant et séparé des poussières par le dispositif de sélection aéraulique sont mélangées à de l'agent réactif frais avant d'être de nouveau injectées dans les fumées, garantissant un niveau optimal pour le nettoyage des fumées.

Selon un autre mode de réalisation, au moins une partie des particules de l'agent réactif chargé en polluant et séparé des poussières par le dispositif de sélection aéraulique sont extraites vers un silo de récupération, afin de les post-traitées et éventuellement les réutilisées, diminuant les coûts de mise en oeuvre du procédé.

Le procédé est un procédé de fabrication de ciment, l'unité de combustion comprenant au moins un four de cuisson du clinker de ciment et au moins un préchauffeur, la matière crue étant successivement préchauffée dans le préchauffeur puis cuite dans le four. En effet, la matière crue pour la fabrication du ciment libère en chauffant des polluants qu'il est nécessaire de nettoyer. L'injection d'un agent réactif comme décrit ci-dessous permet de répondre aux normes concernant l'industrie du ciment à moindre coût tout en étant facilement mis en oeuvre dans une installation de fabrication de ciment.

Selon un mode de réalisation, l'agent réactif est du charbon actif, le polluant étant du mercure.

Selon un exemple de réalisation, le charbon actif comprend des particules de taille supérieure à 60 µm, ce qui permet de facilement le séparer des poussières dans le dispositif de sélection aéraulique, notamment lorsque les poussières sont issues de la fabrication de ciment.

Selon un mode de réalisation, la matière crue est préalablement broyée dans un broyeur avant d'être préchauffée dans le préchauffeur, au moins une partie des fumées du four étant utilisée dans le broyeur pour sécher la matière crue. L'injection des particules de l'agent réactif dans les fumées est alors réalisée en aval du broyeur. Le procédé permet ainsi, tout en nettoyant les fumées, d'utiliser des fumées du four permet en recyclant efficacement une partie de l'énergie du procédé.

Selon un deuxième aspect, l'invention propose une installation selon la revendication 8 pour le traitement de matières minérales destinée à la mise en oeuvre du procédé tel que présenté ci-dessus.

L' unité de combustion comprend un préchauffeur et un four de cuisson de clinker de ciment.

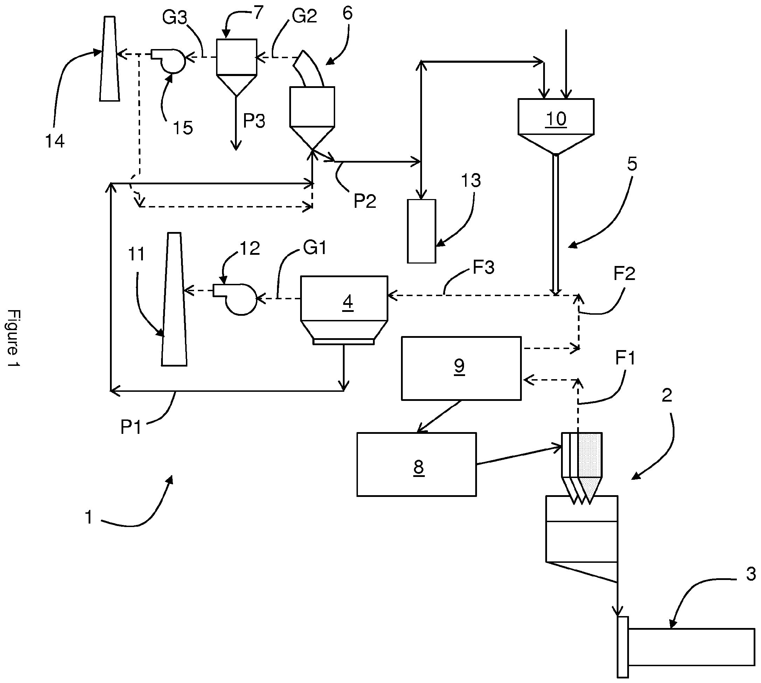

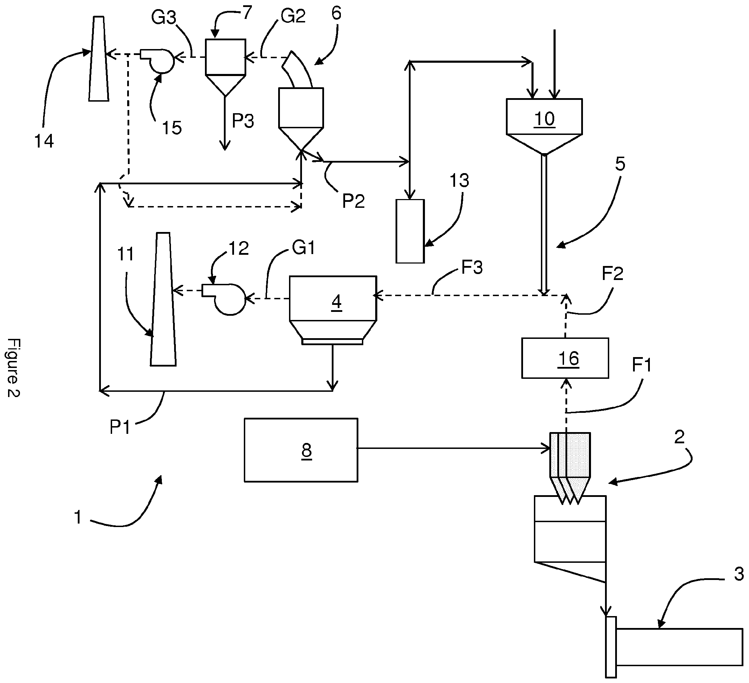

D'autres effets et avantages apparaîtront à la lumière de la description de modes de réalisation de l'invention accompagnée des figures 1 et 2 illustrant de façon schématique un exemple d'une installation de traitement de matières minérales, chacune selon un mode de fonctionnement de l'installation.

Plus précisément, dans ce qui suit, de manière non limitative pour l'invention, l'installation de traitement de matière minérale est une installation de fabrication de ciment, représentée sur les figures 1 et 2.

L'installation 1 comprend notamment une unité de combustion, comportant selon l'exemple des figures 1et 2 un préchauffeur **2** à cyclones et un four **3** rotatif. De manière générale, l'unité de combustion peut comprendre tout équipement au sein duquel de la matière minérale est chauffée au moyen d'une réaction de combustion, avec apparition en général d'une flamme, de sorte que des fumées, comprenant des poussières, sont générées. L'installation 1 comprend de plus un premier dispositif **4** de filtration des fumées, un système **5** d'injection d'un agent réactif vis-à-vis d'au moins un polluant des fumées, un dispositif **6** de sélection aéraulique et un deuxième dispositif **7** de filtration des fumées.

Dans ce qui suit, le réactif est pulvérulent, c'est-à-dire qu'il comprend des particules telles que cela sera explicité plus loin.

La matière crue, typiquement un mélange de matières minérales, est alimentée au préchauffeur 2 de l'installation 1 à partir d'un système **8** d'homogénéisation et de dosage. Selon un premier mode de fonctionnement, un broyeur **9** en fonctionnement alimente le système 8 d'homogénéisation et de dosage. Le préchauffeur 2 à cyclones permet d'augmenter la température de la matière broyée avant qu'elle ne rentre dans le four 3. Le four 3 comprend typiquement au moins un brûleur, placé dans le four 3 à une extrémité opposée de celle par laquelle la matière préchauffée entre. La matière se déplace dans le four vers le brûleur, et ressort du four cuite, formant le clinker.

En sortie du préchauffeur 2, les fumées **F1** comprennent notamment des poussières de matière minérales et du mercure gazeux, sous forme élémentaire ou sous forme de composés du mercure. Ces fumées F1 sont encore suffisamment chaudes pour être envoyées dans le broyeur 9 afin de sécher la matière.

Les fumées **F2** sortant du broyeur 9 comprennent alors également des poussières et du mercure gazeux, et sont chargées en humidité du broyeur 9. Les fumées F2 sont ensuite mises en contact avec les particules d'un agent réactif au mercure, typiquement du charbon actif qui se charge en mercure. Comme cela sera explicité plus loin, le charbon actif est préparé afin que ses particules présentent une granulométrie différente de celle des poussières des fumées du four. Le charbon actif est contenu dans un réservoir **10** relié au système 5 d'injection. Le système 5 d'injection comprend par exemple un injecteur de charbon actif directement dans le circuit de circulation des fumées.

Le système 5 d'injection est disposé en amont du premier dispositif 4 de filtration, qui est par exemple un filtre à manches. Les fumées F3, dans lesquelles le charbon actif a capturé le mercure, traversent alors les manches du filtre, les poussières des fumées et le charbon actif chargé en mercure étant retenus. Le gaz **G1,** ressortant propre du premier filtre 4, peut alors être relâché à l'atmosphère par une première cheminée **11** à l'aide éventuellement d'un premier ventilateur **12.**

Les poussières et le charbon chargé en mercure sont récupérés en un flux de particules **P1** qui est transporté jusqu'au dispositif 6 de sélection aéraulique, qui opère une séparation entre les particules de charbon actif chargé en mercure et les particules de poussière.

La sélection aéraulique définit ici une sélection opérée sur la base notamment de la taille des particules, à l'aide d'un gaz vecteur tel que de l'air. Elle peut toutefois être influencée par d'autres caractéristiques granulométriques des particules, combinées à la taille, par exemple la densité, la forme ou la porosité des particules.

Selon un mode de réalisation, le dispositif 6 de sélection aéraulique comprend un séparateur à air, dans lequel les particules P1 récupérées du premier dispositif 4 de filtration sont transportées à l'aide d'un gaz vecteur, en l'occurrence selon l'exemple présenté ici de l'air, et sont soumises à une force centrifuge permettant d'opérer une séparation en se basant sur la différence de taille éventuellement combinée à une différence de densité et/ou de forme et/ou de porosité entre les particules de charbon actif et les particules de poussière. Par exemple, la taille des poussières des fumées est typiquement inférieure à 30 µm, de sorte qu'en choisissant un charbon actif avec des particules plus grossières, de taille par exemple d'au moins 60 µm, les forces centrifuges et les forces de traînées sur les particules peuvent aisément être réglées pour assurer une séparation efficace entre les particules de charbon actif et les poussières. Plus généralement, on utilisera un agent réactif dont la taille des particules est au moins deux fois supérieure à la taille des poussières. De ce fait, plus précisément, la taille de particules de l'agent réactif est au moins deux fois supérieure à la taille des poussières des fumées générées par l'unité de combustion. On peut caractériser la taille des particules d'un matériau par son dₓ, c'est-à-dire par la maille d'un tamis pour laquelle il y a X% de particules passantes au travers de ce tamis. Ainsi, par exemple, le d₂ du charbon actif, c'est-à-dire la taille de maille du tamis pour lequel 2% des particules de charbon actif passent, est au moins deux fois supérieur au d₉₈ des poussières, c'est-à-dire la taille de la maille du tamis pour laquelle 98% des poussières passent. Dès lors, la séparation aéraulique dans le dispositif 6 de sélection permet de séparer de manière fiable les particules de charbon actif des poussières en se basant notamment sur la taille des particules. Dans cet exemple, le d₂ du charbon actif est une taille de maille qui correspond à une granulométrie du charbon actif égale ou supérieure à 60 micromètres et le d₉₈ des poussières est une taille de maille correspondant à une granulométrie des poussières égale ou inférieure à 30 micromètres.

On notera que la taille des particules de l'agent réactif avant et après adsorption du polluant ne varie que de manière négligeable.

Le séparateur à air peut être du type Turbo Séparateur Ventilé (TSV^{™}), comprenant une turbine, mise en rotation à l'intérieur d'une chambre. Le flux de particules P1 portées par le gaz vecteur est introduit à l'intérieur de la chambre. En ajustant la vitesse de rotation de la turbine et le débit du gaz vecteur, il est opéré une séparation en se basant notamment sur la différence de taille. L'utilisation d'un TSV en tant que dispositif 6 de sélection aéraulique permet d'opérer une séparation nette, de haute performance, entre les particules de charbon actif et les poussières.

A cet effet, le point de classification choisi au dispositif de sélection aéraulique peut être compris entre 25 µm et 80 µm, tel que par exemple entre 30 µm et 60 µm, c'est-à-dire sensiblement supérieur à celui mis en oeuvre dans le document JP2017-29932 qui est compris entre 10 µm et 20 µm.

Cette plage 25 µm et 80 µm couvre en réalité deux points de classification, qui sont respectivement distincts pour les poussières et les grossières. Le point de classification des poussières et le point de classification des grossières dépendent en effet de divers paramètres tels que la granulométrie des matières pulvérulentes, leur densité, leur aspect de surface, qui sont typiquement différents entre les poussières et l'agent réactif.

Ainsi, les particules P2 de charbon actif chargées en mercure, plus grosses que les poussières, sont récupérées par exemple en une sortie basse du séparateur. Une partie du charbon actif chargé en mercure est extraite du procédé, dans un silo **13** de récupération, afin de subir éventuellement un traitement pour être déchargé du mercure et être réutilisées ultérieurement dans le procédé. L'autre partie est renvoyée au réservoir 10 afin d'être mélangé à du charbon actif frais complétant la partie de charbon actif extraite. Par exemple, la quantité de la partie de charbon actif chargé en mercure extraite est calculée de manière statistique, de manière à assurer le renouvellement du charbon actif. De préférence, la quantité de charbon actif extraite représente une partie minoritaire de la quantité totale, de sorte que le charbon actif est majoritairement recyclé.

On note que, contrairement à ce qui est connu, selon l'invention, la taille des particules de charbon actif injectées dans les fumées du procédé est supérieure à celles des particules de poussières, ce qui a priori rend la réactivité du charbon actif moindre face au mercure. Toutefois, la quantité de charbon actif utilisée selon l'invention est de préférence très supérieure à la quantité utilisée usuellement, de manière à obtenir une surface de contact entre le mercure et le charbon actif qui demeure suffisante. Comme le charbon actif est recyclé, et en l'occurrence est utilisé plusieurs fois, par exemple environ vingt fois, avant d'être extrait vers le silo 13 de récupération, non seulement on permet au charbon actif d'être plus longtemps en contact avec le mercure avant de l'extraire, mais en outre il n'y pas de surcoût dû aux grandes quantités utilisés.

Le mélange **G2** de gaz vecteur et de poussières, séparées des particules de charbon actifs, est entrainé en une sortie haute du dispositif 6 de sélection par le gaz vecteur, et est envoyé dans le deuxième dispositif 7 de filtration, qui est sensiblement similaire au premier dispositif 4, c'est-à-dire qui comprend par exemple un filtre à manches. Les poussières sont ainsi retenues sur les manches, des gaz **G3** propres traversant les manches. Les gaz G3 propres sont dirigés en partie vers une deuxième cheminée **14** et en partie vers le dispositif 6 de sélection aéraulique pour servir de gaz vecteur aux particules P1 de poussières et de charbon actif dans le séparateur, la circulation des gaz G3 propres étant assurée par un deuxième ventilateur **15.** Les poussières P3 récupérées dans le deuxième dispositif 7 de filtration sont ainsi débarrassées du charbon actif qui a capté le mercure, et peuvent donc être réinjectées dans le procédé de fabrication du clinker.

La combinaison de la différence granulométrique et de l'utilisation d'un dispositif 6 de séparation aéraulique de haute performance de type TSV assure que les poussières P3 sont débarrassées du charbon actif chargé en mercure, de sorte qu'elles peuvent être complètement valorisées, en étant réinjectée dans le procédé de fabrication du clinker.

En variante, la deuxième cheminée 14 peut être confondue avec la première cheminée 11. En variante aussi, le retour partiel des gaz G3 vers le dispositif 6 de sélection aéraulique peut être supprimé ; de l'air frais peut alors alimenter le dispositif 6de sélection aéraulique en tant que gaz vecteur..

Selon un deuxième mode de fonctionnement, le broyeur 9 peut être mis à l'arrêt, le préchauffeur 2 et le four 3 étant alimentés à partir du système 8 d'homogénéisation et de dosage, préalablement approvisionné par le broyeur 9. Dans ce cas, les fumées F1 sortant du préchauffeur 2 peuvent passer par un système **16** de refroidissement afin de rendre leur température compatible avec le filtre du premier dispositif 4 de filtration. Les fumées F2 refroidies sont, comme précédemment, mise en contact avec du charbon actif depuis le dispositif 5 d'injection, en amont du premier dispositif de filtration. De préférence, le point d'injection du charbon actif par le dispositif 5 d'injection dans le circuit de circulation des fumées est alors plus proche de la sortie des fumées F1 du préchauffeur que dans le premier mode de fonctionnement, de sorte que le temps pendant lequel le charbon actif est en contact avec les fumées avant d'entrer dans le premier filtre est plus important que dans le premier mode de fonctionnement. En effet, comme présenté en introduction, dans ce deuxième mode de fonctionnement, la concentration en mercure dans les fumées peut être plus importante, de sorte qu'il est avantageux d'augmenter le temps de contact entre le charbon actif et les fumées.

Le reste de l'installation et le procédé sont identiques à ce qui a déjà été décrit pour le premier mode de fonctionnement.

L'installation et le procédé de fabrication de ciment décrits permettent ainsi de nettoyer efficacement le mercure des fumées avant de les rejeter dans l'atmosphère en fixant le mercure sur les particules de charbon actif. De plus, le ciment obtenu ainsi ne contient ni mercure ni charbon actif.

En outre, les poussières P3, débarrassées du mercure et du charbon actif et récupérées dans le deuxième dispositif 7 de filtration peuvent être directement utilisées dans la fabrication du clinker de ciment. Il a été déterminé que la proportion de poussières pouvant être récupérées est d'au moins 90%. Ainsi, les pertes de matières premières sont réduites.

Enfin, selon le mode de réalisation présenté ici, le charbon actif introduit dans les fumées est recyclé en étant mélangé à du charbon frais, de sorte qu'il effectue plusieurs passages dans le circuit des fumées avant d'en être extrait. Le charbon actif est ainsi saturé en mercure avant d'être extrait du procédé vers le silo 13 de récupération. L'utilisation du charbon actif est optimisée, diminuant les coûts de mise en oeuvre du procédé.

## Revendications

1. Procédé de traitement de matières minérales dans lequel :
- de la matière minérale crue est chauffée dans une unité (2,3) de combustion;
- au moins une partie des fumées générée par l'unité (2,3) de combustion sont récupérées et envoyées à un premier dispositif (4) de filtration de manière à récupérer des particules (P1) dans les fumées ;
- des particules d'un agent réactif à au moins un polluant présent dans les fumées sont injectées dans les fumées en amont du premier dispositif (4) de filtration et se charge en polluant, de sorte que les particules (P1) récupérées dans le premier dispositif (4) de filtration comprennent un mélange des particules de l'agent réactif chargées en polluant et des poussières, la taille des particules de l'agent réactif étant au moins deux fois supérieure à la taille des poussières ;
- le mélange des poussières et des particules de l'agent réactif chargé en polluant est envoyé dans un dispositif (6) de sélection aéraulique, de manière à séparer les poussières des particules de l'agent réactif chargé ;
- les poussières (P3) séparées des particules de l'agent réactif chargé en polluant sont récupérées au moins en partie dans un deuxième dispositif (7) de filtration ;
- au moins une partie des particules de l'agent réactif chargées en polluant et séparées des poussières par le dispositif (6) de sélection aéraulique est de nouveau injectée dans les fumées, en amont du premier dispositif (4) de filtration et en aval de l'unité de combustion (2,3) de sorte à prolonger le temps de contact de l'agent actif avec les polluants, l'agent actif continuant à se charger en polluants avant d'être extrait du procédé,
- dans lequel le procédé est un procédé de fabrication de ciment, l'unité (2,3) de combustion comprenant au moins un four (3) de cuisson du clinker de ciment et au moins un préchauffeur (2), la matière minérale crue étant successivement préchauffée dans le préchauffeur (2) puis cuite dans le four (3).

2. Procédé selon la revendication 1 dans lequel au moins une partie des particules de l'agent réactif chargé en polluant et séparé des poussières par le dispositif (6) de sélection aéraulique sont mélangées à de l'agent réactif frais avant d'être de nouveau injectées dans les fumées.

3. Procédé selon la revendication 1 ou la revendication 2 dans lequel au moins une partie des particules de l'agent réactif chargé en polluant et séparé des poussières par le dispositif (6) de sélection aéraulique sont extraites vers un silo **(13)** de récupération.

4. Procédé selon l'une quelconque des revendications précédentes, dans lequel l'agent réactif est du charbon actif, le polluant étant du mercure.

5. Procédé selon la revendication 4, dans lequel le charbon actif comprend des particules de taille supérieure à 60 µm.

6. Procédé selon l'une quelconque des revendications précédentes, dans lequel la matière minérale crue est préalablement broyée dans un broyeur (9) avant d'être préchauffée dans le préchauffeur (2), au moins une partie des fumées du four étant utilisée dans le broyeur (9) pour sécher la matière minérale crue, l'injection des particules de l'agent réactif dans les fumées étant réalisée en aval du broyeur (9).

7. Procédé selon l'une des revendications 1 à 6, dans lequel le point de classification choisi au dispositif de sélection aéraulique est compris entre 25 µm et 80 µm.

8. Installation (1) pour traitement de matières minérales destinée à la mise en oeuvre du procédé selon l'une quelconque des revendications précédentes, l'installation (1) comprenant au moins :
- une unité (2,3) de combustion dans laquelle de la matière minérale crue est chauffée, l'unité (2,3) de combustion comprenant au moins un préchauffeur (2) et au moins un four (3) de cuisson de clinker de ciment ;
- un premier dispositif (4) de filtration des fumées de l'unité (2,3) de combustion dans lequel les fumées du four passent ;
- un système (5) d'injection d'un agent réactif vis-à-vis d'au moins un polluant dans les fumées de l'unité (2,3) de combustion en amont du premier dispositif (4) de filtration ;
- un dispositif (6) de sélection aéraulique connecté au premier dispositif (4) de filtration de sorte que les poussières mélangées à l'agent réactif récupérées par le premier dispositif (4) de filtration sont envoyées au dispositif (6) de sélection aéraulique ;
- un deuxième dispositif (7) de filtration connecté au dispositif (6) de sélection aéraulique dans lequel les poussières (P3) séparées de l'agent réactif sont envoyées et récupérées,
- un système de recyclage d'au moins une partie des particules de l'agent réactif chargées en polluant et séparées des poussières par le dispositif (6) de sélection aéraulique configuré de manière à injecter de nouveau lesdites particules de l'agent réactif chargées en polluant dans les fumées, en amont du premier dispositif (4) de filtration et en aval de l'unité de combustion (2,3) de sorte à prolonger le temps de contact de l'agent actif avec les polluants et à permettre à l'agent actif de continuer à se charger en polluants avant d'être extrait du procédé.

## Patentansprüche

1. Verfahren zum Behandeln von Mineralstoffen, wobei:
- roher Mineralstoff in einer Verbrennungseinheit (2, 3) erwärmt wird;
- mindestens ein Teil der Rauchgase, der durch die Verbrennungseinheit (2, 3) erzeugt wird, gesammelt und zu einer ersten Filtervorrichtung (4) befördert werden, um Partikel (P1) in den Rauchgasen zu sammeln;
- Partikel eines Mittels, das auf mindestens einen Schadstoff reagiert, der in den Rauchgasen vorhanden ist, stromaufwärts der ersten Filtervorrichtung (4) injiziert werden und sich mit Schadstoff so beladen, dass die Partikel (P1), die in der ersten Filtervorrichtung (4) gesammelt werden, eine Mischung aus Partikeln des Reaktionsmittels, die mit Schadstoff beladen sind, und Staubteilchen umfassen, wobei die Größe der Partikel des Reaktionsmittels mindestens zweimal größer als die Größe der Staubteilchen ist;
- die Mischung aus Staubteilchen und Partikeln des Reaktionsmittels, das mit Schadstoff beladen ist, zu einer Aeraulikauswahlvorrichtung (6) befördert wird, um die Staubteilchen von Partikeln des beladenen Reaktionsmittels zu trennen;
- die Staubteilchen (P3), die von den Partikeln des Reaktionsmittels, das mit Schadstoff beladen ist, getrennt sind, mindestens teilweise in einer zweiten Filtervorrichtung (7) gesammelt werden;
- mindestens ein Teil der Partikel des Reaktionsmittels, die mit Schadstoff beladen und von Staubteilchen durch die Aeraulikauswahlvorrichtung (6) getrennt sind, erneut in die Rauchgase injiziert wird, stromaufwärts der ersten Filtervorrichtung (4) und stromabwärts der Verbrennungseinheit (2, 3), um die Kontaktzeit des aktiven Mittels mit den Schadstoffen zu verlängern, wobei das aktive Mittel sich weiterhin mit Schadstoffen belädt, bevor es aus dem Verfahren extrahiert wird,
- wobei das Verfahren ein Zementherstellungsverfahren ist, die Verbrennungseinheit (2, 3) umfassend mindestens einen Zementklinkerbrennofen (3) und mindestens eine Vorwärmeinrichtung (2), wobei der rohe Mineralstoff nacheinander in der Vorwärmeinrichtung (2) vorgewärmt, dann in dem Ofen (3) gebrannt wird.

2. Verfahren nach Anspruch 1, wobei mindestens ein Teil der Partikel des Reaktionsmittels, das mit Schadstoff beladen und von Staubteilchen durch die Aeraulikauswahlvorrichtung (6) getrennt ist, mit dem frischen Reaktionsmittel gemischt werden, bevor sie erneut in die Rauchgase injiziert werden.

3. Verfahren nach Anspruch 1 oder 2, wobei mindestens ein Teil der Partikel des Reaktionsmittels, das mit Schadstoff beladen und von Staubteilchen durch die Aeraulikauswahlvorrichtung (6) getrennt ist, in Richtung eines Sammelbehälters **(13)** extrahiert werden.

4. Verfahren nach einem der vorstehenden Ansprüche, wobei das Reaktionsmittel aus Aktivkohle, der Schadstoff aus Quecksilber ist.

5. Verfahren nach Anspruch 4, wobei die Aktivkohle Partikel mit einer Größe umfasst, die größer als 60 µm ist.

6. Verfahren nach einem der vorstehenden Ansprüche, wobei der rohe Mineralstoff zuvor in einem Mahlwerk (9) gemahlen wird, bevor er in der Vorwärmeinrichtung (2) vorgewärmt wird, wobei mindestens ein Teil der Rauchgase des Ofens in dem Mahlwerk (9) zum Trocknen des rohen Mineralstoffs verwendet wird, wobei die Injektion der Partikel des Reaktionsmittels in die Rauchgase stromabwärts des Mahlwerks (9) durchgeführt wird.

7. Verfahren nach einem der Ansprüche 1 bis 6, wobei der Klassifikationspunkt, der an der Aeraulikauswahlvorrichtung gewählt wird, zwischen 25 µm und 80 µm liegt.

8. Anlage (1) für die Behandlung von Mineralstoffen, die für die Implementierung des Verfahrens nach einem der vorstehenden Ansprüche bestimmt ist, die Anlage (1) umfassend mindestens:
- eine Verbrennungseinheit (2, 3), wobei der rohe Mineralstoff erwärmt wird, die Verbrennungseinheit (2, 3) umfassend mindestens eine Vorwärmeinrichtung (2) und mindestens einen Zementklinkerbrennofen (3);
- eine erste Filtervorrichtung (4) für Rauchgase der Verbrennungseinheit (2,3), die die Rauchgase des Ofens passieren;
- ein Injektionssystem (5) eines Mittels, das gegenüber mindestens einem Schadstoff in den Rauchgasen der Verbrennungseinheit (2, 3) stromaufwärts der ersten Filtervorrichtung (4) reagiert;
- eine Aeraulikauswahlvorrichtung (6), die mit der ersten Filtervorrichtung (4) so verbunden ist, dass die Staubteilchen, die mit dem Reaktionsmittel vermischt sind, die durch die erste Filtervorrichtung (4) gesammelt werden, zu der Aeraulikauswahlvorrichtung (6) befördert werden;
- eine zweite Filtervorrichtung (7), die mit der Aeraulikauswahlvorrichtung (6) verbunden ist, wobei die Staubteilchen (P3), die von dem Reaktionsmittel getrennt sind, befördert und gesammelt werden,
- ein System zum Rückgewinnen mindestens eines Teils der Partikel des Reaktionsmittels, die mit Schadstoff beladen und von Staubteilchen durch die Aeraulikauswahlvorrichtung (6) getrennt sind, das konfiguriert ist, um erneut die Partikel des Reaktionsmittels, die mit Schadstoff in den Rauchgasen beladen sind, stromaufwärts der ersten Filtervorrichtung (4) und stromabwärts der Verbrennungseinheit (2, 3) zu injizieren, um die Kontaktzeit des aktiven Mittels mit den Schadstoffen zu verlängern und es zu ermöglichen, dass das aktive Mittel sich weiterhin mit Schadstoffen belädt, bevor es aus dem Verfahren extrahiert wird.

## Claims

1. Process for treating mineral materials, wherein:
- crude mineral material is heated in a combustion unit (2, 3);
- at least some of the flue gases generated by the combustion unit (2, 3) are recovered and sent to a first filtration device (4) so as to recover particles (P1) in the flue gases;
- particles of an agent that is reactive to at least one pollutant present in the flue gases are injected into the flue gases upstream of the first filtration device (4) and loaded with pollutant such that the particles (P1) recovered in the first filtration device (4) comprise a mixture of the particles of the pollutant-loaded reactive agent and dust, the size of the particles of the reactive agent being at least two times greater than the size of the dust,
- the mixture of the dust and the particles of the pollutant-loaded reactive agent is sent to an aeraulic selection device (6) so as to separate the dust from the particles of the loaded reactive agent;
- the dust (P3) separated from the particles of the pollutant-loaded reactive agent is recovered at least in part in a second filtration device (7);
- at least some of the particles of the reactive agent loaded with pollutant and separated from the dust by the aeraulic selection device (6) are again injected into the flue gases, upstream of the first filtration device (4) and downstream of the combustion unit (2, 3), so as to extend the contact time of the active agent with the pollutants, the active agent continuing to be loaded with pollutants before being extracted from the process,
- wherein the process is a process for manufacturing cement, the combustion unit (2, 3) comprising at least one furnace (3) for baking cement clinker and at least one preheater (2), the crude mineral material being successively preheated in the preheater (2) and then baked in the furnace (3).

2. Process according to claim 1, wherein at least some of the particles of the reactive agent loaded with pollutant and separated from the dust by the aeraulic selection device (6) are mixed with fresh reactive agent before being injected into the flue gases again.

3. Process according to claim 1 or claim 2, wherein at least some of the particles of the reactive agent loaded with pollutant and separated from the dust by the aeraulic selection device (6) is extracted to a recovery silo **(13).**

4. Process according to any of the preceding claims, wherein the reactive agent is activated carbon, the pollutant being mercury.

5. Process according to claim 4, wherein the activated carbon comprises particles of a size greater than 60 µm.

6. Process according to any of the preceding claims, wherein the crude mineral material is first ground in a grinder (9) before being preheated in the preheater (2), at least some of the flue gases of the furnace being used in the grinder (9) in order to dry the crude mineral material, the injection of the particles of the reactive agent into the flue gases being carried out downstream of the grinder (9).

7. Process according to any of claims 1 to 6, wherein the chosen classification point for the aeraulic selection device is between 25 µm and 80 µm.

8. Installation (1) for treating mineral materials intended for the implementation of the method according to any of the preceding claims, the installation (1) comprising at least:
- a combustion unit (2, 3) in which crude mineral material is heated, the combustion unit (2, 3) comprising at least one preheater (2) and at least one furnace (3) for baking cement clinker,
- a first device (4) for filtering the flue gases from the combustion unit (2, 3) into which the flue gases from the furnace pass;
- a system (5) for injecting an agent that is reactive to at least one pollutant into the fumes from the combustion unit (2, 3) upstream of the first filtration device (4);
- an aeraulic selection device (6) connected to the first filtration device (4) such that the dust mixed with the reactive agent recovered by the first filtration device (4) is sent to the aeraulic selection device (6);
- a second filtration device (7) connected to the aeraulic selection device (6) into which the dust (P3) separated from the reactive agent is sent and in which said dust is recovered,
- a system for recycling at least some of the particles of the reactive agent loaded with pollutant and separated from the dust by the aeraulic selection device (6) configured so as to again inject said particles of the reactive agent loaded with pollutant into the flue gases, upstream of the first filtration device (4) and downstream of the combustion unit (2, 3) so as to extend the contact time of the active agent with the pollutants and to allow the active agent to continue to be loaded with pollutants before being extracted from the process.
